# FASCICULE DE BREVET EUROPEEN

(11) **EP 2 739 059 B1**
(45) Date de publication et mention de la délivrance du brevet: **13.03.2019**
(21) Numéro de dépôt: 13195399.4
(22) Date de dépôt: 03.12.2013
(51) Int. Cl.: H04N 21/258, H04N 21/414, H04N 21/418, H04N 21/442, H04N 21/488

(54) **Procédé de restitution de contenus audio et/ou vidéo**
Wiedergabeverfahren von Audio- und/oder Videoinhalten
Method for reproducing audio and/or video content

(30) Priorité: 03.12.2012 FR 1261559
(43) Date de publication de la demande: 04.06.2014
(73) Titulaire: Orange, 75015 Paris (FR)
(72) Inventeur: Olivier, Pascal, 75001 Paris (FR); Augui, Jérôme, 92190 Meudon (FR); Bertolus, Cédric, 92120 Montrouge (FR)
(74) Mandataire: Regimbeau

(56) Documents cités:
- US-A1- 2004 207 719

## Description

### DOMAINE TECHNIQUE GENERAL

La présente invention concerne la diffusion de contenus numériques au sein d'un foyer à partir de terminaux mobiles.

### ETAT DE L'ART

Les picoprojecteurs sont des dispositifs miniaturisés, le plus souvent autonomes et portatifs, qui permettent facilement et n'importe où la projection d'images ou de vidéo.

Couplés à des haut-parleurs et équipés d'interfaces de connexion, les picoprojecteurs permettent aujourd'hui « d'amplifier » le contenu de terminaux mobiles tels que des smartphones ou des tablettes tactiles, c'est-à-dire de leur offrir un affichage en grand écran avec un son de haute qualité en lieu et place de l'écran et des haut-parleurs internes du terminal, limités par leur taille.

De tels dispositifs apportent satisfaction, et permettent par exemple de projeter des photos, des vidéos personnelles, des chaines de télévision, etc. depuis le smartphone. Lorsque ce dernier est connecté à un réseau de communication, on peut par exemple amplifier une visioconférence. L'expérience utilisateur s'en trouve sensiblement améliorée.

On constate toutefois que le picoprojecteur reste un simple prolongement d'un terminal donné.

Le document US 2004/0207719 A1 décrit un procédé de restitution de contenus audio et/ou vidéo depuis des moyens d'affichage et/ou des moyens de diffusion audio d'un dispositif, comprenant les étapes de détection d'un équipement d'identification d'un utilisateur à proximité du dispositif et de restitution dudit au moins un contenu.

L'invention vient améliorer la situation.

### PRESENTATION DE L'INVENTION

La présente invention se rapporte ainsi selon un premier aspect à un procédé de restitution de contenus audio et/ou vidéo depuis des moyens d'affichage et/ou des moyens de diffusion audio d'un dispositif,
le procédé étant caractérisé en ce qu'il comprend la mise en oeuvre, par des moyens de traitement de données du dispositif, d'étapes de :
(a) détection d'un équipement d'identification d'un utilisateur à proximité du dispositif ;
(b) obtention d'au moins un type de contenu et d'au moins une action à exécuter associée au type de contenu pour ledit équipement d'identification détecté, comprenant l'interrogation d'une base de données comprenant pour chaque équipement d'identification associé au dispositif des préférences de l'utilisateur relatives aux contenus à restituer, ces préférences constituant en une liste des types de contenus dont la restitution est requise suite à l'étape (a), un type de contenu correspondant à une action à effectuer par le dispositif ;
(c) exécution de l'action pour obtenir au moins un contenu audio et/ou vidéo à restituer associé audit équipement d'identification ;
(d) restitution dudit au moins un contenu.

La combinaison d'une détection d'utilisateurs à proximité et la création d'un enregistrement « tampon » des contenus avant restitution permet le partage du dispositif entre les membres d'un foyer et son fonctionnement en mode automatique. L'utilisation d'une base de données permet l'enregistrement de préférences utilisateur pour un fonctionnement automatique : l'utilisateur paramètre les types de contenus qu'il souhaite voir restitués sans action de sa part. De plus, cela permet un contrôle parental.

Le dispositif de l'invention est ainsi capable de gérer une pluralité de terminaux, en particulier ceux d'un foyer, afin de transformer le picoprojecteur en une sorte de « majordome » des membres du foyer qui amplifie le contenu de chacun des terminaux du foyer en délivrant messages, contenus et informations personnalisées à chacun.

Selon d'autres caractéristiques avantageuses et non limitatives :
- l'étape (c) comprend une étape de réception dudit au moins un contenu depuis un réseau de communication sur lequel ledit contenu est stocké et auquel le dispositif est connecté (le téléchargement est le moyen de plus facile pour obtenir n'importe quel contenu) ;
- l'étape (c) comprend une étape d'ajout dudit au moins un contenu à un enregistrement de contenus à restituer (cet enregistrement est le « tampon » qui permet de gérer simultanément une pluralité d'utilisateurs) ;
- ledit enregistrement de contenus à restituer est une file d'attente stockée dans des moyens de stockage de données du dispositif (Cette file d'attente permet une restitution de type « FIFO » selon l'ordre dans lequel les contenus sont déterminés) ;
- ledit enregistrement de contenus à restituer est commun à une pluralité d'équipements d'identification associés au dispositif (le fait que l'enregistrement soit commun permet de mutualiser l'équipement quand bien même plusieurs utilisateurs auraient des contenus à restituer simultanément) ;
- un équipement d'identification d'un utilisateur est une carte à puce ou un terminal mobile de l'utilisateur (ces dispositifs personnels très répandus facilitent l'identification aussi bien des adultes que des enfants) ;
- le dispositif comprend des moyens de communication sans contact, la détection de la proximité d'un équipement d'identification consistant en la détection de l'établissement d'une communication entre l'équipement d'identification et les moyens de communication sans contact (il s'agit d'un critère facile à mettre en oeuvre pour détecter la proximité d'un utilisateur) ;
- le dispositif est connecté au réseau via un boitier de connexion à Internet apte à établir un réseau local sans fil, la détection de la proximité d'un équipement d'identification comprenant la détection d'une connexion de ce terminal mobile audit réseau local sans fil (la quasi-totalité des terminaux mobiles sont configurés pour se connecter automatiquement au Wi-Fi domestique dès que leur utilisateur est à portée de son boitier d'accès à Internet, ce critère est donc très facilement exploitable) ;
- la base de données est stockée sur des moyens de stockage de données d'un serveur connecté au dispositif via le réseau ou est stockée sur des moyens de stockage de données du dispositif ;
- l'étape (c) comprend une étape d'envoi d'au moins une requête de transmission de contenu depuis un serveur du réseau en fonction des préférences associées audit équipement d'identification de l'utilisateur (le réseau Internet permet un accès direct aux contenus depuis des serveurs dédiés, pour une disponibilité permanente, sans saturer une mémoire du dispositif) ;
- les moyens d'affichage du dispositif consistent en un picoprojecteur (cela permet un dispositif très compact et portatif offrant une grande image).

Selon un deuxième aspect, l'invention concerne un dispositif comprenant des moyens d'affichage et des moyens de diffusion audio pour la restitution de contenus audio et/ou vidéo,
caractérisé en ce qu'il comprend des moyens de traitement de données configurés pour :
- détecter un équipement d'identification d'un utilisateur à proximité du dispositif ;
- obtenir au moins un type de contenu et d'au moins une action à exécuter associée au type de contenu pour ledit équipement d'identification détecté comprenant l'interrogation d'une base de données comprenant pour chaque équipement d'identification associé au dispositif des préférences de l'utilisateur relatives aux contenus à restituer, ces préférences constituant en une liste des types de contenus dont la restitution est requise suite à l'étape (a), un type de contenu correspondant à une action à effectuer par le dispositif ;
- exécuter l'au moins une action pour obtenir au moins un contenu audio et/ou vidéo à restituer associé audit équipement d'identification ;
- restituer ledit au moins un contenu.

Selon un troisième et un quatrième aspect, l'invention concerne respectivement un produit programme d'ordinateur comprenant des instructions de code pour l'exécution d'un procédé selon le premier aspect de l'invention de restitution de contenus audio et/ou vidéo depuis des moyens d'affichage et/ou des moyens de diffusion audio d'un dispositif; et un moyen de stockage lisible par un équipement informatique sur lequel un produit programme d'ordinateur comprend des instructions de code pour l'exécution d'un procédé selon le premier aspect de l'invention de restitution de contenus audio et/ou vidéo depuis des moyens d'affichage et/ou des moyens de diffusion audio d'un dispositif.

Par picoprojecteur, on entendra tout système compact de vidéoprojection d'images.

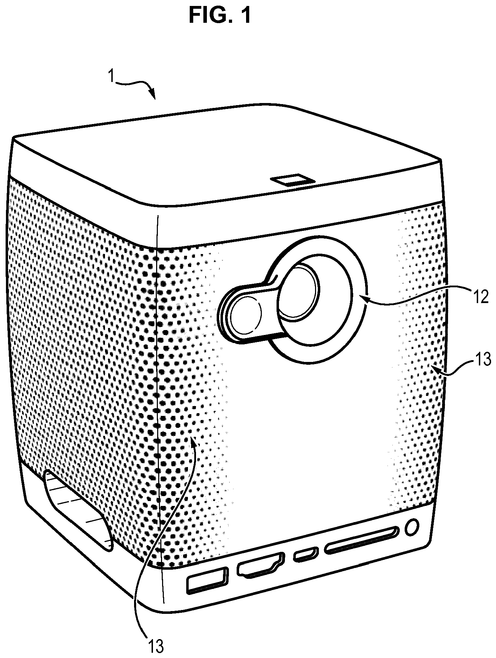

Sur la figure 1, le dispositif 1 représenté comprend en outre des connectiques (USB, HDMI, Carte SD, etc...) pour la connexion à d'autres périphériques.

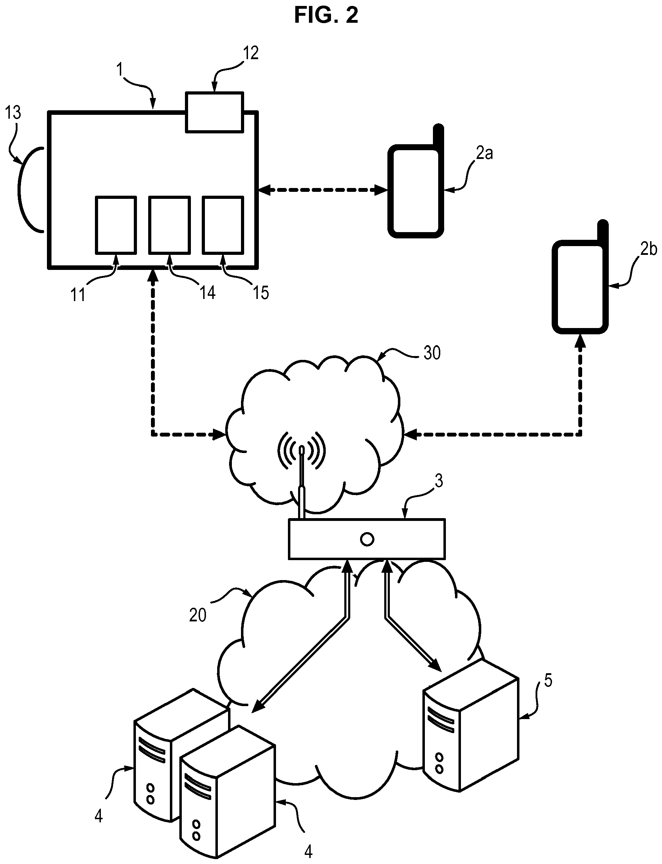

En référence à la figure 2, le dispositif 1 comprend avantageusement des moyens de traitement de données 11 tels qu'un processeur, des moyens de stockage de données 12 tels qu'une mémoire flash, et des moyens de communication sans contact 15 qui seront décrits ultérieurement.

Le dispositif 1 est représenté en communication avec un réseau de communication 20 qui est en particulier le réseau Internet. Dans le mode de réalisation représenté sur la figure 2, dispositif 1 est connecté au réseau 20 via un boitier de connexion à Internet 3 (boitier plus communément appelé une « box ») apte à générer un réseau local sans fil 30 (en particulier un réseau Wi-Fi). La connexion entre le dispositif 1 et le boitier 3 peut dans ce cas se faire soit via le réseau sans fil 30 (à condition que le dispositif 1 comprenne des moyens d'émission/réception du signal sans fil), soit en filaire, par exemple via Ethernet.

Alternativement, il est possible que le dispositif 1 comprenne une carte SIM et soit capable de se connecter aux réseaux de téléphonie mobile, par exemple le réseau 3G.

### Principe de l'invention

Le présent procédé permet de restituer, au sein d'un foyer, tous des contenus pour tous ses membres. Pour cela, le procédé comprend une détection d'un équipement d'identification 2a, 2b d'un utilisateur à proximité du dispositif 1, une détermination d'au moins un contenu audio et/ou vidéo à restituer associé audit équipement d'identification 2a, 2b et une restitution dudit au moins un contenu.

Plus précisément, le procédé comprend la mise en oeuvre par les moyens de traitement de données 11 du dispositif 1 d'étapes de :
(a) détection d'un équipement d'identification 2a, 2b d'un utilisateur à proximité du dispositif 1 ;
(b) obtention d'au moins un type de contenu et d'au moins une action à exécuter associée au type de contenu pour ledit équipement d'identification 2a, 2b détecté ;
(c) exécution de l'action pour obtenir au moins un contenu audio et/ou vidéo à restituer associé audit équipement d'identification 2a, 2b ;
(d) restitution dudit au moins un contenu.

Grâce à ce procédé, comme l'on verra, à chaque fois que l'un des utilisateurs du dispositif 1 d'un foyer est à proximité (en d'autres termes quand il est dans le foyer), le dispositif 1 va restituer automatiquement les messages ou informations dédiées, en particulier en utilisant une liste (l'enregistrement) qui sera décrite plus loin.

### Détection de proximité

Le procédé commence ainsi par une étape (a) de détection d'un équipement d'identification 2a, 2b à proximité du dispositif. L'objectif est de déterminer ainsi que l'utilisateur de l'équipement 2a, 2b est à proximité.

Les équipements d'identification 2a, 2b sont en particulier des terminaux mobiles (des smartphones, des tablettes tactiles, etc.), mais peuvent être également des « badges » de type carte à puce.

Ces badges peuvent être donnés aux enfants du foyer pour leur permettre d'utiliser le dispositif 1 sans terminal mobile. Ils sont avantageusement complémentaires des moyens de communication sans contact 15 évoqués précédemment de sorte à ce que l'utilisateur n'ait qu'à approcher le badge des moyens 15 pour que la détection de proximité ait lieu.

En d'autres termes, la détection de proximité d'un équipement d'identification 2a, 2b d'un utilisateur consiste avantageusement en la détection de l'établissement d'une communication sans fil entre l'équipement d'identification 2a, 2b et les moyens de communication sans contact 15, laquelle est caractéristique de la présence de l'utilisateur à moins de quelques mètres.

Les moyens de communication sans contact 15 sont ainsi avantageusement un émetteur/récepteur radio à courte portée de type « Near-Field Communication » (NFC) ou toute autre technologie « Radio-Frequency Identification » (RFID).

On note que ces technologies présentent l'avantage d'être également supportées par un grand nombre de smartphones. Un utilisateur muni d'un terminal mobile NFC peut déclencher les moyens de communication sans contact 15 en approchant son terminal de la même façon qu'un badge.

Alternativement ou en complément, le dispositif 1 peut comprendre des moyens de communication sans contact 15 de type Bluetooth. Cette technologie, très largement rependue sur les terminaux mobiles, a une portée de quelques mètres.

Encore alternativement ou en complément, dans le cas dans lequel le dispositif 1 est connecté au réseau 20 via un boitier de connexion à Internet 3 apte à établir un réseau sans fil 30 (de type Wi-Fi), la détection de la proximité d'un équipement d'identification 2a, 2b de type terminal mobile peut comprendre la détection d'une connexion de ce terminal mobile à ce réseau sans fil 30.

Toutes les possibilités de détection de la proximité d'un équipement d'identification 2a, 2b d'un utilisateur qui viennent d'être décrites peuvent être mises en oeuvre simultanément.

Dans l'exemple de la figure 2, deux terminaux mobiles 2a, 2b sont détectés présents via deux canaux différents : le premier terminal 2a est connecté via Bluetooth aux moyens de communication sans contact 15, alors que le deuxième terminal 2b est connecté via le réseau sans fil 30 généré par le boitier d'accès à Internet 3.

On note que l'étape de détection peut être répétée à intervalles réguliers (en d'autres termes répétition des étapes (a) à (c)) afin de vérifier que l'utilisateur est toujours connecté, et donc à proximité, et le cas échéant déterminer à nouveau si des contenus doivent être restitués.

### Détermination de contenus à restituer

Lorsqu'un terminal mobile du foyer (et de façon générale un équipement d'identification d'un utilisateur) est détecté à proximité, le procédé détermine puis obtient au moins un contenu associé, par exemple les e-mails non lus, à restituer. Pour cela, les étapes (b) et (c) sont mises en oeuvre.

Dans l'étape (b), les moyens de traitement de données 11 du dispositif 1 déterminent pour l'équipement d'identification détecté au moins un type de contenu (par exemple SMS, e-mails, bourse, photos/vidéos reçues etc.) et au moins une action associée au type de contenu. Le sens du terme « action » est décrit ultérieurement. Pour cela, le dispositif 1 dispose typiquement d'une base de données (stockée soit sur les moyens de stockage de données 14 du dispositif 1, soit sur des moyens de stockage de données d'un serveur 5 connecté au dispositif 1 via le réseau 20, le serveur 5 étant optionnel) comprenant pour chaque équipement d'identification 2a, 2b associé au dispositif 1 des préférences de l'utilisateur relatives aux contenus à restituer.

Ces préférences peuvent ainsi constituer en une liste des types de contenus dont la restitution est requise suite à la détection de proximité. Chacun de ces types de contenus fait partie d'une liste prédéterminée, et correspond à une « action » à effectuer par le dispositif 1, action dont l'exécution à l'étape (c) entraîne l'obtention (c'est-à-dire la détermination ou la récupération) d'au moins un contenu, et qui implique généralement la consultation via requête d'au moins un serveur 4 gérant le type de contenu. En effet, chaque contenu peut être disponible au niveau local, par exemple via un périphérique (tel une clé USB ou un disque dur) connecté au dispositif 10. Dans un mode de réalisation particulier les contenus sont accessibles en ligne. Ainsi l'étape (c) peut comprendre la réception dudit au moins un contenu depuis le réseau de communication 20 (Internet) sur lequel ledit contenu est stocké et auquel le dispositif 1 est connecté (ou plutôt, l'étape (c) peut comprendre l'exécution d'une action ayant pour conséquence cette détermination ou récupération).

Par exemple le type « e-mails » peut correspondre à l'action « relever les e-mails de l'utilisateur sur le serveur de messagerie », et le type « bourse » peut correspondre à l'action « interroger un serveur fournissant une représentation du cours de la bourse ». De telles actions prennent par exemple la forme d'une ou plusieurs requêtes de transmission de contenu (éventuellement préécrites, de telles requêtes sont connues de l'homme du métier), et ainsi l'étape (c) comprend une étape d'envoi d'au moins une requête de transmission de contenu depuis un serveur 4 du réseau 20 par exemple en fonction des préférences associées audit équipement d'identification 2a, 2b de l'utilisateur. L'homme du métier saura adapter le procédé selon l'invention à tout type de contenu dont la restitution peut être requise par un utilisateur.

De façon avantageuse, si l'équipement 2a, 2b est un terminal mobile, l'utilisateur peut paramétrer via une application du terminal ses préférences (par exemple il peut décider de ne plus restituer ses SMS). Une telle modification des paramètres entraîne, via le réseau 20, la mise à jour de la base de données sur les moyens de stockage de données 14 du dispositif 1, ou sur des moyens de stockage de données d'un serveur 5.

Si l'équipement 2a, 2b est un badge, les préférences associées ne peuvent être modifiées que via une interface (éventuellement protégée par mot de passe) sur un ordinateur. Cela permet par exemple qu'un enfant ne puisse pas modifier lui-même les préférences associées à son badge. Par exemple, on peut définir que le seul contenu auquel un enfant aura accès via son badge est un chaîne de télévision pour enfants.

L'obtention des types de contenus à restituer et des actions associées comprend donc l'interrogation de la base de données stockée de façon à accéder à la liste des types de contenus définis dans les préférences de l'utilisateur, pour déterminer les actions à entreprendre, avant l'exécution de ces actions pour récupérer les contenus.

Pour reprendre l'exemple précédent, si l'utilisateur 1 a les types « e-mails non lus » et « bourse » obtenus à l'étape (b) (par exemple par ce qu'ils sont définis dans ses préférences), le résultat de l'exécution des actions associées et ainsi de la détermination de contenus à restituer peut être « 9 e-mails vocalisés + un graphique du cours de la bourse commenté », soit 10 contenus dont 9 contenus audio et 1 contenu audio et vidéo.

Si l'utilisateur 2 (enfant) a le seul type « chaîne numéro N » défini dans ses préférences, le résultat de l'exécution des actions associées et ainsi de la détermination de contenu est « une vidéo correspondant au programme actuel de la chaîne ».

Un contenu déterminé peut être immédiatement restitué par le dispositif 1, mais dans un mode de réalisation particulier, l'étape (c) comprend une étape d'ajout dudit au moins un contenu à un enregistrement de contenus à restituer (Comme précédemment, ce peut être le résultat de l'exécution d'une action). Les contenus restitués dans l'étape (d) seront les contenus listés dans l'enregistrement.

En d'autres termes, le procédé constitue alors un « enregistrement » de contenus à restituer, avantageusement stocké sur les moyens de stockage de données 14 du dispositif 1. Par enregistrement on entend toute forme de recensement des contenus à restituer, par exemple un tableau ou un dossier, mais en particulier cet enregistrement prend la forme d'une liste, dans laquelle on va ajouter chaque contenu identifié.

Il est important de comprendre que « l'enregistrement » ne comprend pas forcément les contenus obtenus (en d'autres termes que ceux-ci n'ont pas encore été reçus), mais par exemple seulement leurs adresses d'accès (URL si les contenus sont sur le réseau 20). L'ordre des étapes de constitution de l'enregistrement et de réception des contenus est donc indifférent.

Dans notre exemple, cette liste est de type « file d'attente », c'est-à-dire qu'elle fonctionne en FIFO (Premier entré, premier sorti), en d'autres termes que les premiers contenus déterminés comme à restituer seront restitués en premier.

La liste de contenus à restituer est conçue commune aux d'équipements d'identification 2a, 2b du foyer associés au dispositif 1. En d'autres termes, elle mélange les contenus des différents utilisateurs du foyer.

Si par exemple l'utilisateur 1 a été détecté en premier, les 10 contenus mentionnés précédemment sont ajoutés en premier à la file. Si l'utilisateur 2 est détecté ensuite, son contenu est associé ensuite. La file dispose alors de 11 éléments.

Il est à noter que des règles de priorité peuvent faire que certains contenus passent avant d'autres (et donc que le principe FIFO ne soit pas parfaitement respecté). Par exemple on peut prévoir que les e-mails ou SMS doublent automatiquement les vidéos.

Dans un mode de réalisation particulier, on met en oeuvre une organisation de type « carrousel » qui permet de respecter le principe FIFO tout en priorisant certains contenus : lorsqu'un contenu prioritaire tel un e-mail est déterminé, celui-ci est inséré à la fin de la file, mais les contenus déjà dans la file (moins prioritaires) sont dépilés sans être restitué puis réinsérés à la fin de la file. Ce mécanisme de carrousel (ou boucle) fait ainsi tourner les contenus jusqu'à ce que les contenus prioritaires soient en tête. Ils sont alors restitués.

Dans une dernière étape, les contenus récupérés le cas échéant depuis les serveurs 4 associés sont restitués, en suivant la séquence donnée par la file.

A chaque fois qu'un contenu est restitué, il est supprimé de la file, et on restitue le suivant. Il est à noter qu'il est tout à fait possible de compléter la file (suite à détection de la proximité d'autres utilisateurs) alors que des contenus sont en cours de restitution, les suivants étant mis à la fin de la file (à moins qu'il y ait des règles de priorité spécifiques nécessitant par exemple l'utilisation du carrousel). On peut également prévoir que dès lors qu'un utilisateur s'en va (et donc n'est plus détecté à proximité) la restitution des contenus associés soit interrompue et la file purgée.

### Dispositif picoprojecteur

Selon un deuxième aspect, l'invention concerne le dispositif pour la mise en oeuvre du procédé de restitution d'un contenu audio et/ou vidéo, tel que celui représenté sur la figure 2.

Ainsi, ce dispositif 1, avantageusement connecté à un réseau de communication 20, comprend comme expliqué des moyens d'affichage 12 (qui consistent plus particulièrement en un picoprojecteur) et des moyens de diffusion audio 13 pour la restitution des contenus audio et/ou vidéo, des moyens de traitement de données 11, et éventuellement des moyens de stockage de données 14 et des moyens de communication sans contact 15.

Les moyens de traitement de données 11 sont donc configurés pour :
- détecter un équipement d'identification 2a, 2b d'un utilisateur à proximité du dispositif 1 ;
- obtenir au moins un type de contenu et d'au moins une action à exécuter associée au type de contenu pour ledit équipement d'identification 2a, 2b détecté ;
- exécuter l'au moins une action pour obtenir au moins un contenu audio et/ou vidéo associé audit équipement d'identification 2a, 2b à restituer ;
- restituer ledit au moins un contenu.

De façon avantageuse, les moyens de traitement de données 11 sont en outre configurés pour (en exécution de certaines actions) :
- ajouter un contenu identifié à un enregistrement de contenus à restituer ;
- recevoir depuis le réseau 20 et restituer les contenus listés dans ledit enregistrement.

### Produit programme d'ordinateur

Selon un troisième et un quatrième aspects, l'invention concerne un produit programme d'ordinateur comprenant des instructions de code pour l'exécution (sur des moyens de traitement de donnés 11, en particulier ceux du dispositif 1) d'un procédé de restitution de contenus audio et/ou vidéo depuis des moyens d'affichage 12 et/ou des moyens de diffusion audio 13 du dispositif 1 (éventuellement connecté au réseau de communication 20) selon le premier aspect de l'invention, ainsi que des moyens de stockage lisibles par un équipement informatique (par exemple la mémoire 14 de ce dispositif 1) sur lequel on trouve ce produit programme d'ordinateur.

## Revendications

1. Procédé de restitution de contenus audio et/ou vidéo depuis des moyens d'affichage (12) et/ou des moyens de diffusion audio (13) d'un dispositif (1),
le procédé étant **caractérisé en ce qu'**il comprend la mise en oeuvre, par des moyens de traitement de données (11) du dispositif (1), d'étapes de :
(a) détection d'un équipement d'identification (2a, 2b) d'un utilisateur à proximité du dispositif (1) ;
(b) obtention d'au moins un type de contenu et d'au moins une action à exécuter associée au type de contenu pour ledit équipement d'identification (2a, 2b) détecté, comprenant l'interrogation d'une base de données comprenant pour chaque équipement d'identification (2a, 2b) associé au dispositif (1) des préférences de l'utilisateur relatives aux contenus à restituer, ces préférences constituant en une liste des types de contenus dont la restitution est requise suite à l'étape (a), un type de contenu correspondant à une action à effectuer par le dispositif (1) ;
(c) exécution de l'action pour obtenir au moins un contenu audio et/ou vidéo à restituer associé audit équipement d'identification (2a, 2b);
(d) restitution dudit au moins un contenu.

2. Procédé selon la revendication 1, dans lequel l'étape (c) comprend une étape de réception dudit au moins un contenu depuis un réseau de communication (20) auquel le dispositif (1) est connecté, ledit au moins un contenu étant stocké sur le réseau (20).

3. Procédé selon l'une des revendications 1 et 2, dans lequel l'étape (c) comprend une étape d'ajout dudit au moins un contenu à un enregistrement de contenus à restituer.

4. Procédé selon la revendication 3, dans lequel ledit enregistrement de contenus à restituer est une file d'attente stockée dans des moyens de stockage de données (14) du dispositif (1).

5. Procédé selon l'une des revendications 3 et 4, dans lequel ledit enregistrement de contenus à restituer est commun à une pluralité d'équipements d'identification (2a, 2b) associés au dispositif (1).

6. Procédé selon l'une des revendications précédentes, dans lequel un équipement d'identification (2a, 2b) d'un utilisateur est une carte à puce ou un terminal mobile de l'utilisateur.

7. Procédé selon l'une des revendications précédentes, dans lequel le dispositif (1) comprend des moyens de communication sans contact (15), la détection de la proximité d'un équipement d'identification (2a, 2b) consistant en la détection de l'établissement d'une communication entre l'équipement d'identification (2a, 2b) et les moyens de communication sans contact (15).

8. Procédé selon l'une des revendications 2 à 7, dans lequel ledit dispositif (1) est connecté au réseau (20) via un boitier de connexion à Internet (3) apte à établir un réseau local sans fil (30), la détection de la proximité d'un équipement d'identification (2a, 2b) comprenant la détection d'une connexion de ce terminal mobile audit réseau local sans fil (30).

9. Procédé selon l'une des revendications 2 à 7, dans lequel la base de données est stockée sur des moyens de stockage de données d'un serveur (5) connecté au dispositif (1) via le réseau (20) ou est stockée sur des moyens de stockage de données (14) du dispositif (1).

10. Procédé selon la revendication 9, dans lequel l'étape (c) comprend une étape d'envoi d'au moins une requête de transmission de contenu depuis un serveur (4) du réseau (20) en fonction des préférences associées audit équipement d'identification (2a, 2b) de l'utilisateur.

11. Procédé selon l'une des revendications précédentes, dans lequel les moyens d'affichage du dispositif (12) consistent en un picoprojecteur.

12. Dispositif (1) comprenant des moyens d'affichage (12) et des moyens de diffusion audio (13) pour la restitution de contenus audio et/ou vidéo,
**caractérisé en ce qu'**il comprend des moyens de traitement de données (11) configurés pour :
- détecter un équipement d'identification (2a, 2b) d'un utilisateur à proximité du dispositif (1) ;
- obtenir au moins un type de contenu et d'au moins une action à exécuter associée au type de contenu pour ledit équipement d'identification (2a, 2b) détecté comprenant l'interrogation d'une base de données comprenant pour chaque équipement d'identification (2a, 2b) associé au dispositif (1) des préférences de l'utilisateur relatives aux contenus à restituer, ces préférences constituant en une liste des types de contenus dont la restitution est requise suite à l'étape (a), un type de contenu correspondant à une action à effectuer par le dispositif (1) ;
- exécuter l'au moins une action pour obtenir au moins un contenu audio et/ou vidéo à restituer associé audit équipement d'identification (2a, 2b),
- restituer ledit au moins un contenu.

13. Produit programme d'ordinateur comprenant des instructions de code pour l'exécution d'un procédé selon l'une des revendications 1 à 11 de restitution de contenus audio et/ou vidéo depuis des moyens d'affichage (12) et/ou des moyens de diffusion audio (13) d'un dispositif (1).

14. Moyen de stockage lisible par un équipement informatique sur lequel un produit programme d'ordinateur comprend des instructions de code pour l'exécution d'un procédé selon l'une des revendications 1 à 11 de restitution de contenus audio et/ou vidéo depuis des moyens d'affichage (12) et/ou des moyens de diffusion audio (13) d'un dispositif (1).

## Patentansprüche

1. Verfahren zur Wiedergabe von Audio- und/oder Videoinhalten ausgehend von Anzeigeeinrichtungen (12) und/oder von Audio-Übertragungseinrichtungen (13) einer Vorrichtung (1),
wobei das Verfahren **dadurch gekennzeichnet ist, dass** es das Durchführen folgender Schritte durch Datenverarbeitungseinrichtungen (11) der Vorrichtung (1) enthält:
(a)Erfassung einer Identifikationsausrüstung (2a, 2b) eines Benutzers in der Nähe der Vorrichtung (1) ;
(b)Erhalt mindestens eines Inhaltstyps und mindestens einer dem Inhaltstyp zugeordneten auszuführenden Aktion für die erfasste Identifikationsausrüstung (2a, 2b), die die Abfrage einer Datenbank enthält, die für jede der Vorrichtung (1) zugeordnete Identifikationsausrüstung (2a, 2b) Vorlieben des Benutzers bezüglich der wiederzugebenden Inhalte enthält, wobei diese Vorlieben in einer Liste Inhaltstypen bildet, deren Wiedergabe nach dem Schritt (a) gefordert wird, wobei ein Inhaltstyp einer von der Vorrichtung (1) auszuführenden Aktion entspricht;
(c)Ausführung der Aktion, um mindestens einen wiederzugebenden Audio- und/oder Videoinhalt zu erhalten, der der Identifikationsausrüstung (2a, 2b) zugeordnet ist;
(d)Wiedergabe des mindestens einen Inhalts.

2. Verfahren nach Anspruch 1, wobei der Schritt (c) einen Schritt des Empfangs des mindestens einen Inhalts von einem Kommunikationsnetz (20) enthält, an das die Vorrichtung (1) angeschlossen ist, wobei der mindestens eine Inhalt im Netz (20) gespeichert ist.

3. Verfahren nach einem der Ansprüche 1 und 2, wobei der Schritt (c) einen Schritt der Hinzufügung des mindestens einen Inhalts zu einer Aufzeichnung von wiederzugebenden Inhalten enthält.

4. Verfahren nach Anspruch 3, wobei die Aufzeichnung von wiederzugebenden Inhalten eine Warteschleife ist, die in Datenspeichereinrichtungen (14) der Vorrichtung (1) gespeichert ist.

5. Verfahren nach einem der Ansprüche 3 und 4, wobei die Aufzeichnung von wiederzugebenden Inhalten einer Vielzahl von der Vorrichtung (1) zugeordneten Identifikationsausrüstungen (2a, 2b) gemeinsam ist.

6. Verfahren nach einem der vorhergehenden Ansprüche, wobei eine Identifikationsausrüstung (2a, 2b) eines Benutzers eine Chipkarte oder ein mobiles Endgerät des Benutzers ist.

7. Verfahren nach einem der vorhergehenden Ansprüche, wobei die Vorrichtung (1) kontaktlose Kommunikationseinrichtungen (15) enthält, wobei die Erfassung der Nähe einer Identifikationsausrüstung (2a, 2b) aus der Erfassung des Aufbaus einer Kommunikation zwischen der Identifikationsausrüstung (2a, 2b) und den kontaktlosen Kommunikationseinrichtungen (15) besteht.

8. Verfahren nach einem der Ansprüche 2 bis 7, wobei die Vorrichtung (1) an das Netz (20) über eine Internet-Anschlussbox (3) angeschlossen ist, die ein drahtloses lokales Netz (30) aufbauen kann, wobei die Erfassung der Nähe einer Identifikationsausrüstung (2a, 2b) die Erfassung eines Anschlusses dieses mobilen Endgeräts an das drahtlose lokale Netz (30) enthält.

9. Verfahren nach einem der Ansprüche 2 bis 7, wobei die Datenbank in Datenspeichereinrichtungen eines Servers (5) gespeichert ist, der an die Vorrichtung (1) über das Netz (20) angeschlossen ist, oder in Datenspeichereinrichtungen (14) der Vorrichtung (1) gespeichert ist.

10. Verfahren nach Anspruch 9, wobei der Schritt (c) einen Schritt des Sendens mindestens einer Inhaltsübertragungsanforderung von einem Server (4) des Netzes (20) abhängig von den der Identifikationsausrüstung (2a, 2b) des Benutzers zugeordneten Vorlieben enthält.

11. Verfahren nach einem der vorhergehenden Ansprüche, wobei die Anzeigeeinrichtungen (12) der Vorrichtung aus einem Pico-Projektor bestehen.

12. Vorrichtung (1), die Anzeigeeinrichtungen (12) und/oder Audio-Übertragungseinrichtungen (13) zur Wiedergabe von Audio- und/oder Videoinhalten enthält,
**dadurch gekennzeichnet, dass** sie Datenverarbeitungseinrichtungen (11) enthält, die konfiguriert sind:
- eine Identifikationsausrüstung (2a, 2b) eines Benutzers in der Nähe der Vorrichtung (1) zu erfassen;
- mindestens einen Inhaltstyp und mindestens eine dem Inhaltstyp zugeordnete auszuführende Aktion für die erfasste Identifikationsausrüstung (2a, 2b) zu erhalten, die die Abfrage einer Datenbank enthält, die für jede der Vorrichtung (1) zugeordnete Identifikationsausrüstung (2a, 2b) Vorlieben des Benutzers bezüglich der wiederzugebenden Inhalte enthält, wobei diese Vorlieben in einer Liste Inhaltstypen bildet, deren Wiedergabe nach dem Schritt (a) gefordert wird, wobei ein Inhaltstyp einer von der Vorrichtung (1) auszuführenden Aktion entspricht;
- die mindestens eine Aktion auszuführen, um mindestens einen wiederzugebenden Audio- und/oder Videoinhalt zu erhalten, der der Identifikationsausrüstung (2a, 2b) zugeordnet ist,
- den mindestens einen Inhalt wiederzugeben.

13. Computerprogrammprodukt, das Codeanweisungen zur Ausführung eines Verfahrens nach einem der Ansprüche 1 bis 11 zur Wiedergabe von Audio- und/oder Videoinhalten ausgehend von Anzeigeeinrichtungen (12) und/oder Audio-Übertragungseinrichtungen (13) einer Vorrichtung (1) enthält.

14. Speichereinrichtung, die von einer EDV-Ausrüstung lesbar ist, auf der ein Computerprogrammprodukt Codeanweisungen zur Ausführung eines Verfahrens nach einem der Ansprüche 1 bis 11 zur Wiedergabe von Audio- und/oder Videoinhalten ausgehend von Anzeigeeinrichtungen (12) und/oder Audio-Übertragungseinrichtungen (13) einer Vorrichtung (1) enthält.

## Claims

1. Method for rendering audio and/or video contents from display means (12) and/or audio broadcasting means (13) of a device (1),
the method being **characterized in that** it comprises the implementation, by data processing means (11) of the device (1), of steps of:
(a) detection of an identification equipment item (2a, 2b) of a user in proximity to the device (1);
(b) obtaining of at least one type of content and of at least one action to be executed associated with the type of content for said identification equipment item (2a, 2b) detected, comprising the interrogation of a database comprising for each identification equipment item (2a, 2b) associated with the device (1) user preferences relating to the contents to be rendered, these preferences constituting in a list of the types of contents whose rendition is requested subsequent to step (a), a type of content corresponding to an action to be performed by the device (1);
(c) execution of the action to obtain at least one audio and/or video content to be rendered associated with said identification equipment item (2a, 2b);
(d) rendition of said at least one content.

2. Method according to Claim 1, in which step (c) comprises a step of receiving said at least one content from a communication network (20) to which the device (1) is connected, said at least one content being stored on the network (20).

3. Method according to one of Claims 1 and 2, in which step (c) comprises a step of adding said at least one content to a recording of contents to be rendered.

4. Method according to Claim 3, in which said recording of contents to be rendered is a queue stored in data storage means (14) of the device (1).

5. Method according to one of Claims 3 and 4, in which said recording of contents to be rendered is common to a plurality of identification equipment items (2a, 2b) associated with the device (1).

6. Method according to one of the preceding claims, in which an identification equipment item (2a, 2b) of a user is a chip card or a mobile terminal of the user.

7. Method according to one of the preceding claims, in which the device (1) comprises contactless communication means (15), the detection of the proximity of an identification equipment item (2a, 2b) consisting of the detection of the establishment of a communication between the identification equipment item (2a, 2b) and the contactless communication means (15).

8. Method according to one of Claims 2 to 7, in which said device (1) is connected to the network (20) via an Internet connection box (3) able to establish a wireless local network (30), the detection of the proximity of an identification equipment item (2a, 2b) comprising the detection of a connection of this mobile terminal to said wireless local network (30).

9. Method according to one of Claims 2 to 7, in which the database is stored on data storage means of a server (5) connected to the device (1) via the network (20) or is stored on data storage means (14) of the device (1).

10. Method according to Claim 9, in which step (c) comprises a step of dispatching at least one request for transmission of content from a server (4) of the network (20) as a function of the preferences associated with said identification equipment item (2a, 2b) of the user.

11. Method according to one of the preceding claims, in which the display means of the device (12) consist of a picoprojector.

12. Device (1) comprising display means (12) and audio broadcasting means (13) for the rendition of audio and/or video contents,
**characterized in that** it comprises data processing means (11) configured to:
- detect an identification equipment item (2a, 2b) of a user in proximity to the device (1);
- obtain at least one type of content and at least one action to be executed associated with the type of content for said detected identification equipment item (2a, 2b) comprising the interrogation of a database comprising for each identification equipment item (2a, 2b) associated with the device (1) user preferences relating to the contents to be rendered, these preferences constituting in a list of the types of contents whose rendition is requested subsequent to step (a), a type of content corresponding to an action to be performed by the device (1);
- execute the at least one action to obtain at least one audio and/or video content to be rendered associated with said identification equipment item (2a, 2b),
- render said at least one content.

13. Computer program product comprising code instructions for the execution of a method according to one of Claims 1 to 11 for rendering audio and/or video contents from display means (12) and/or audio broadcasting means (13) of a device (1).

14. Storage means readable by a computing equipment item on which a computer program product comprises code instructions for the execution of a method according to one of Claims 1 to 11 for rendering audio and/or video contents from display means (12) and/or audio broadcasting means (13) of a device (1).
